# FASCICULE DE BREVET EUROPEEN

(11) **EP 0 412 032 B1**
(45) Date de publication et mention de la délivrance du brevet: **10.11.1993**
(21) Numéro de dépôt: 90460015.2
(22) Date de dépôt: 20.03.1990
(51) Int. Cl.: A01K 1/015

(54) **Caillebotis pour porcherie**
Spaltenboden für einen Schweinestall
Slatted floor for piggery

(30) Priorité: 02.08.1989 FR 8910583
(43) Date de publication de la demande: 06.02.1991
(73) Titulaire: GALVELPOR SA, F-29800 Landerneau (FR)
(72) Inventeur: Lagadec, Jean, F-29219 Le Relecq-Kerhuon (FR)
(74) Mandataire: Le Guen, Louis François

(56) Documents cités:
- EP-A- 0 161 717
- DE-A- 3 208 066
- FR-A- 2 181 544
- FR-A- 2 585 214
- FR-A- 2 624 249

## Description

L'invention concerne un caillebotis utilisé dans une porcherie, notamment pour une case de mise bas de porcelets, et en particulier d'un caillebotis métallique constitué de moyens anti-dérapants.

On connaît, par le document FR-A-2 181 544, un caillebotis pour élevage industriel d'animaux constitué de l'assemblage de lattes de section trapézoïdale ou triangulaire sur des traverses supports. Ces lattes sont régulièrement espacées de façon à déterminer sur la surface plane du caillebotis des voies d'évacuation à orifice évasé qui ne retiennent pas les déjections et déchets.

Les caillebotis du type de celui décrit dans ce document sont généralement réalisés en un matériau métallique et présentent, de ce fait, l'inconvénient majeur d'être glissant, rendant ainsi ces caillebotis dangereux pour les porcs qui peuvent, au pire, s'y faire des fractures de pattes.

On a déjà tenter de remédier à cet inconvénient en utilisant, comme le décrit le document FR-A-2 585 214, des lattes de section triangulaire présentant au moins une face plane située au niveau de la surface de circulation de la grille, certaines de ces lattes étant munies de surélévations. Ces caillebotis offrent de bonnes propriétés anti-dérapantes. Les deux documents décrivent un dispositif comportant les caractéristique du préambule de la revendication 1.

Néanmoins, leur structure est telle que leur réalisation est relativement difficile et donc coûteuse.

Le but de l'invention est de remédier aux inconvénients cités ci-dessus et propose donc un caillebotis dont la structure, facilement réalisable et donc peu coûteuse, est telle qu'il présente de bonnes propriétés antidérapantes.

Ce but est atteint par la mise en oeuvre de la combinaison des moyens qui sont définis dans la revendication 1. Des caractéristiques préférentielles sont indiquées dans les revendications indépendantes.

Ces caractéristiques de l'invention apparaîtront à la lecture de la description suivante d'un exemple de réalisation, ladite description étant faite en relation avec les dessins joints, parmi lesquels:
la Fig 1 est une vue de dessus d'un caillebotis selon l'invention,
la Fig. 2 est une coupe selon l'axe II/II de la Fig. 1,
la Fig. 3 est une vue partielle d'une coupe selon l'axe III/III de la Fig. 1, et
la Fig. 4 est une vue de côté partielle d'un caillebotis selon la présente invention.

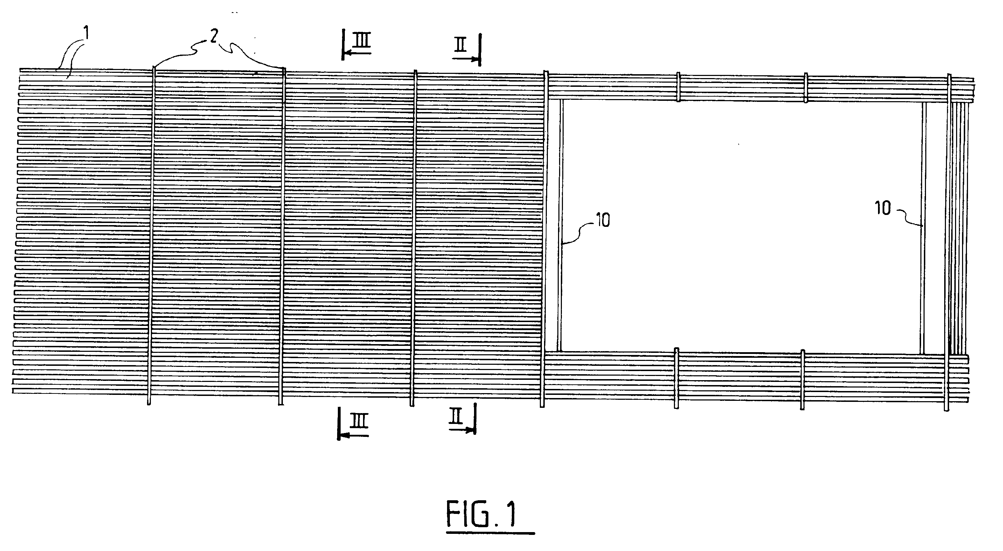

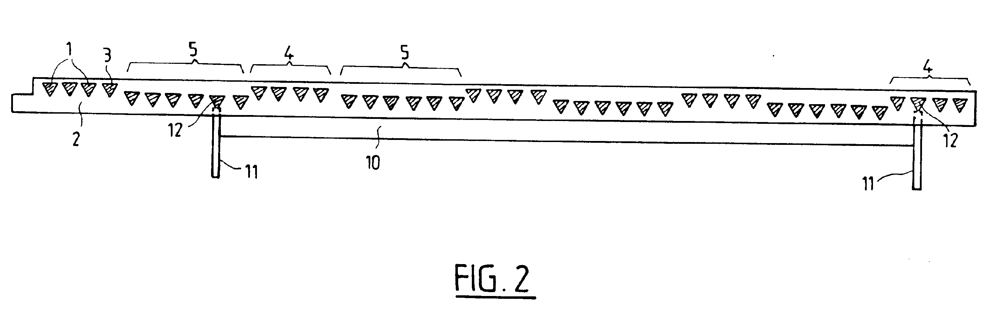

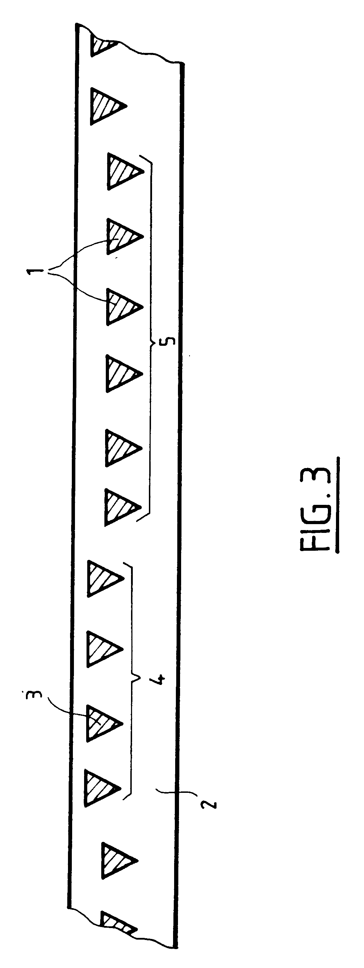

Le caillebotis de la présente invention, représenté vu de dessus à la Fig. 1, a une forme sensiblement rectangulaire. Il comporte des lattes 1 parallèles entre elles et équidistantes qui sont fixées longitudinalement sur des traverses 2 parallèles entre elles et perpendiculaires aux lattes 1. Celles-ci ont une section triangulaire et présentent une face plane 3 horizontale tournée vers le haut (Figs. 2 et 3). L'ensemble de ces faces planes 3 constitue le plancher de la case.

Les traverses sont constituées de barres de section rectangulaire qui sont poinçonnées pour présenter des trous de section triangulaire dans lesquels sont enfilées les lattes. La fixation, par elle-même, est réalisée par soudage ou tout autre moyen équivalent connu de l'homme de métier. Cet assemblage permet d'obtenir une bonne résistance à la flexion et d'obtenir un caillebotis autoporteur. Remarquons également que, par cet assemblage, les traverses dépassent des surfaces constituées par les faces supérieures des lattes, ce qui crée des anti-dérapants transversaux la surface du caillebotis (Figs. 2 et 3).

La position des lattes par rapport aux traverses est expliquée en relation avec la Fig. 2. Les lattes sont regroupées en plusieurs groupes 4, 5, un groupe 4 ayant un premier nombre de lattes alternant, le long des traverses 2, avec un groupe 5 ayant un second nombre de lattes Chacun de ces groupes se caractérise par le niveau, par rapport au bord supérieur des traverses 2, des lattes appartenant à ces groupes. Ainsi, pour les groupes 4, le niveau est plus faible que celui des groupes 5. De manière avantageuse, les groupes 4 d'un premier nombre de lattes comptent quatre lattes, et les groupes 5 d'un second nombre de lattes six lattes. Les groupes 4 de quatre lattes alternent alors avec des groupes 5 de six lattes.

Cette alternance des groupes de quatre et de six lattes constitue des dénivellations et forment des anti-dérapants longitudinaux à la surface du caillebotis.

Le caillebotis de la présente invention dispose donc d'anti-dérapants longitudinaux constitués par les groupes de lattes 4, 5 et d'anti-dérapants transversaux constitués par les traverses 2.

Selon une réalisation préférée de l'invention, aux extrémités des traverses se trouvent des premiers groupes de lattes 4, c'est-à-dire des groupes de lattes dont le niveau, par rapport au bord supérieur des traverses, est le plus faible.

Selon une autre réalisation préférée de l'invention, des groupes de trois lattes, au lieu de quatre, sont placés aux extrémités des traverses, le niveau de ces lattes étant le même que celui d'un premier groupe 4.

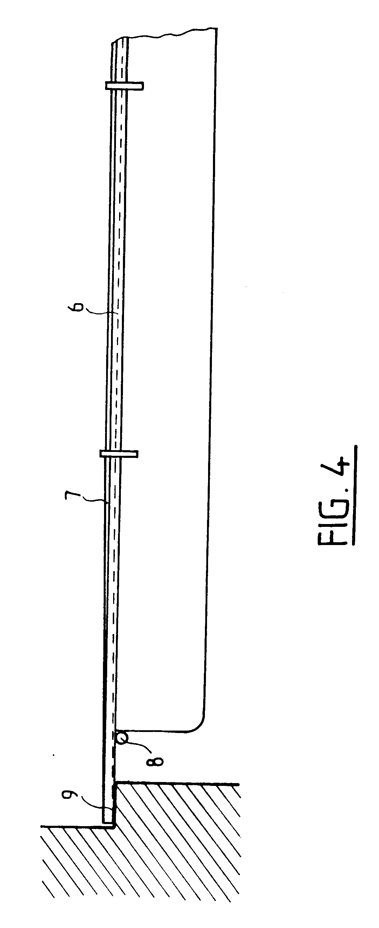

Comme représenté à la Fig. 4, les lattes 6 appartenant aux groupes dont les faces supérieures sont les plus proches des bords supérieurs des traverses sont courbées à l'avant du caillebotis pour arriver au niveau des lattes 7 constituant les autres groupes de lattes. Une tige 8 reliant, à l'avant, les lattes supérieures 6 et les lattes inférieures 7 permet de maintenir la courbure obtenue. Ceci permet d'avoir un meilleur appui lorsque le caillebotis est posé sur des rebords 9 présents sur les murs de la porcherie ou sur des pieds de béton.

Les caillebotis de la présente invention peuvent être associés par deux, montés côte à côte. Ils sont attenants l'un à l'autre par leur longueur.

De préférence, l'un d'eux est muni d'une plaque chauffante servant de nid pour les porcelets. Cette plaque chauffante peut être constituée d'un câble chauffant noyé dans une dalle de béton, de métal ou de plastique.

A la Fig. 1, on a représenté un caillebotis prévu pour recevoir une telle plaque chauffante. Celle-ci est posée sur deux longerons transversaux 10 fixés sur deux autres longerons 11 parallèles aux lattes. Ces deux derniers longerons 11 sont soudés sur les parties inférieures de deux traverses, juste en-dessous de deux lattes 12. Cet ensemble de longerons constitue un cadre, à l'intérieur duquel ne se trouvent ni lattes et ni traverses et sur lequel est posée puis fixée la plaque chauffante.

## Revendications

1. Caillebotis de case pour truies et porcelets de forme sensiblement rectangulaire et comportant des lattes (1) parallèles entre elles et équidistantes qui sont fixées longitudinalement sur des traverses (2) perpendiculaires à ces lattes, les lattes ayant une section triangulaire et présentant une face plane (3) horizontale tournée vers le haut, caractérisé en ce que les traverses espacées (2) sont constituées de barres présentant sur leur longueur des trous de forme sensiblement triangulaire régulièrement espacés et prévus pour recevoir les lattes (1), celles-ci étant fixées aux traverses (2) dont les parties dépassant la surface supérieure des lattes (1) constituent des premiers moyens antidérapants, et en ce que les lattes sont regroupées en plusieurs groupes (4, 5), des premiers groupes (4) ayant un premier nombre de lattes alternant avec des seconds groupes (5) ayant un second nombre de lattes, le niveau, par rapport au bord supérieur des traverses (2), des lattes appartenant aux premiers groupes (4) étant inférieur à celui des lattes appartenant aux seconds groupes (5) de manière à former des seconds moyens antidérapants.

2. Caillebotis selon la revendication 1, caractérisé en ce que le nombre de lattes des premiers groupes (4) est de quatre et le nombre de lattes des seconds groupes (5) est de six.

3. Caillebotis selon l'une des revendications 1 ou 2, caractérisé en ce qu'à l'avant du caillebotis est prévu un cadre constitué de deux longerons transversaux (10) fixés sur deux autres longerons 11 parallèles aux lattes et fixés sur deux traverses, ledit cadre étant prévu pour recevoir une plaque chauffante servant de nid pour les porcelets.

4. Montage de caillebotis dans une case pour truies, caractérisé en qu'il est réalisé par association, par leur longueur, de deux caillebotis selon l'une des revendications 1 à 3.

5. Montage selon la revendication 4, caractérisé en ce que l'un des deux caillebotis associés est muni d'une plaque chauffante.

## Patentansprüche

1. Spaltenboden für einen Stall für Mutterschweine und Ferkel mit einer im wesentlichen rechteckförmigen Gestalt, welcher Latten (1) aufweist, die parallel und in gleichen Abständen zueinander angeordnet sind, und die in Längsrichtung auf Querverbindungen (2) festgelegt sind, die senkrecht zu diesen Latten sind, wobei die Latten einen dreieckförmigen Querschnitt haben und eine ebene horizontale Fläche (3) besitzen, welche nach oben weist, **dadurch gekennzeichnet**, daß die beabstandeten Querverbindungen (2) von Streben gebildet werden, welche auf ihrer Länge Öffnungen mit im wesentlichen dreieckförmiger Gestalt haben, welche in regelmäßigen Abständen vorgesehen und zur Aufnahme der Latten (1) bestimmt sind, wobei die Streben fest an den Querverbindungen (2) angebracht sind, deren Teile höher als die obere Fläche der Latten (1) liegen, welche die erste Gleitschutzeinrichtung bilden, und daß die Latten in mehreren Gruppen (4, 5) gruppenweise angeordnet sind, wobei die ersten Gruppen (4) eine erste Anzahl von Latten haben, welche unterschiedlich zu jener der zweiten Gruppen (5) ist, welche eine zweite Anzahl von Latten haben, und wobei die Höhenlage der Latten bezüglich des oberen Randes der Querverbindungen (2) bei den ersten Gruppen (4) niedriger als jene der zu den zweiten Gruppen (5) gehörenden Latten derart ist, daß sich eine zweite Gleitschutzeinrichtung bildet.

2. Spaltenboden nach Anspruch 1, **dadurch gekennzeichnet,** daß die Anzahl der Latten der ersten Gruppen vier beträgt und die Anzahl der Latten der zweiten Gruppen sechs beträgt.

3. Spaltenboden nach einem der Ansprüche 1 oder 2, **dadurch** **gekennzeichnet**, daß vor dem Erstellen des Spaltenbodens ein Rahmen aus zwei Querholmen (10) vorgesehen wird, welche auf zwei weiteren Längsholmen (10) befestigt sind, die parallel zu den Latten und auf zwei Querverbindungen festgelegt sind, wobei der Rahmen zur Aufnahme einer Heizplatte vorgesehen ist, welche zu Brutzwecken der Ferkel dient.

4. Konstruktion eines Spaltenbodens in einem Stall für Mutterschweine, **dadurch gekennzeichnet**, daß sie dadurch erhalten wird, daß in Längsrichtung zwei Spaltenböden nach einem der Ansprüche 1 bis 3 vorgesehen werden.

5. Konstruktion nach Anspruch 4, **dadurch gekennzeichnet**, daß einer der beiden Spaltenböden mit einer Heizplatte versehen ist.

## Claims

1. Box grating for sows and piglets of approximately rectangular shape and comprising mutually parallel and equidistant slats (1) which are longitudinally attached to cross bars (2) which are perpendicular to said slats, the slats having a triangular cross-section and having a horizontal planar side (3) facing upwards, characterised in that the spaced cross bars (2) are constituted by rods which along their length are provided with regularly spaced holes of an approximately triangular shape which are adapted to receive the slats (1), these being fixed to the cross bars (2) whose portions projecting beyond the upper surface of the slats (1) constitute first anti-slip means, and in that the slats are brought together in several groups (4, 5), first groups (4) having a first number of slats alternating with second groups (5) having a second number of slats, the level, in relation to the upper edge of the cross bars (2), of the slats belonging to the first groups (4) being lower than that of the slats belonging to the second groups (5) in such a way that second anti-slip means are formed.

2. Grating according to claim 1, characterised in that the number of slats in the first groups (4) is four and the number of slats in the second groups (5) is six.

3. Grating according to one of claims 1 or 2, characterised in that at the front of the grating a frame is provided, constituted by two transverse girders (10) attached to two other girders 11 which are parallel to the slats and attached to two cross bars, said frame being adapted for receiving a hotplate serving as a nest for the piglets.

4. Grating assembly in a box for sows, characterised in that it is effected by lengthwise connection of two gratings according to one of claims 1 to 3.

5. Grating assembly according to claim 4, characterised in that one of the connected gratings is provided with a hotplate.
